# EUROPÄISCHE PATENTSCHRIFT

(11) **EP 1 346 857 B1**
(45) Veröffentlichungstag und Bekanntmachung des Hinweises auf die Patenterteilung: **14.06.2006**
(21) Anmeldenummer: 02027441.1
(22) Anmeldetag: 10.12.2002
(51) Int. Cl.: B60H 1/22

(54) **Befestigungsanordnung zur festen Anbringung eines Fahrzeugheizgerätes an einem Fahrzeug**
Fastening system for solidly mounting a vehicle heating device on a vehicle
Système de fixation pour le montage solide d'un appareil de chauffage sur un véhicule

(30) Priorität: 19.03.2002 DE 10212145
(43) Veröffentlichungstag der Anmeldung: 24.09.2003
(73) Patentinhaber: J. Eberspächer GmbH & Co. KG, 73730 Esslingen (DE)
(72) Erfinder: Humburg, Michael, 73035 Göppingen (DE)

(56) Entgegenhaltungen:
- DE-A- 19 936 802
- FR-A- 2 371 594
- US-A- 2 775 293
- US-A- 5 855 319

## Beschreibung

Die vorliegende Erfindung betrifft eine Befestigungsanordnung zur festen Anbringung eines Fahrzeugheizgerätes an einem Fahrzeug gemäß Anspruch 1.

Aus der DE 199 36 802 C2 ist eine Befestigungsanordnung bekannt, vermittels welcher ein Heizgerät mit seinem Heizgerätgehäuse über einen Heizgerätehalter an einem Fahrzeug angebracht werden kann. Derartige Maßnahmen zum Festlegen eines Heizgerätes sind insbesondere dann gewünscht bzw. erforderlich, wenn ein derartiges beispielsweise als Standheizung oder Zuheizer zu betreibendes Heizgerät nachträglich in ein Fahrzeug integriert werden soll. Bei dieser bekannten Befestigungsanordnung ist ein plattenartiger Halter vorgesehen, der zur Festlegung des Heizgerätes zunächst fahrzeugfest zu installieren ist. An der Unterseite weist dieser Heizgerätehalter einen hakenartigen Auflageabschnitt auf, auf welchem das Heizgerät mit seinem Heizgerätegehäuse mit einem unteren Bereich desselben aufgelegt werden kann. Um ein Abkippen des Heizgerätegehäuses von dem Heizgerätehalter zu verhindern, wird durch den oberen Bereich des Heizgerätegehäuses und den oberen Bereich des Heizgerätehalters hindurch eine Befestigungsschraube eingebracht, die dann für den festen Zusammenhalt sorgt.

Es ist die Aufgabe der vorliegenden Erfindung, eine Befestigungsanordnung zur Festlegung eines Heizgerätes an einem Fahrzeug vorzusehen, welche bei einfachem Aufbau und kleiner Baugröße eine einfache Anbringung eines Heizgerätes ermöglicht.

Erfindungsgemäß wird diese Aufgabe gelöst durch eine Befestigungsanordnung zur festen Anbringung eines Fahrzeugheizgerätes an einem Fahrzeug, umfassend einen fahrzeugfest zu installierenden Heizgerätehalter, an einer Baugruppe von Heizgerätehalter und Heizgerät wenigstens einen Haltevorsprung und an der anderen Baugruppe von Heizgerätehalter und Heizgerät wenigstens eine zur Festlegung des Heizgeräts an dem Heizgerätehalter den wenigstens einen Haltevorsprung aufnehmende Halteaussparung, wobei die wenigstens eine Halteaussparung einen Eintrittsbereich aufweist, in welchem der wenigstens eine Haltevorsprung in diese eingreifend positionierbar ist, einen an den Eintrittsbereich anschließenden ersten Verschiebeabschnitt aufweist, in welchem der wenigstens eine Haltevorsprung bei Festlegung des Heizgerätes in einer ersten Verschieberichtung bei beibehaltenem Eingriff in die wenigstens eine Halteaussparung verschiebbar ist, und einen an den ersten Verschiebeabschnitt anschließenden zweiten Verschiebeabschnitt aufweist, in welchem der wenigstens eine Haltevorsprung bei Festlegung des Heizgerätes bei beibehaltenem Eingriff in die wenigstens eine Halteaussparung in einer von der ersten Verschieberichtung sich unterscheidenden zweiten Verschieberichtung verschiebbar ist, wobei bei an dem Heizgerätehalter festgelegtem Heizgerät der wenigstens eine Haltevorsprung in den zweiten Verschiebeabschnitt eingreifend positioniert ist.

Bei der erfindungsgemäßen Befestigungsanordnung wird also die Halterung des Heizgerätes bzw. des Heizgerätegehäuses desselben am Heizgerätehalter bereits durch das Einführen eines Haltevorsprungs in eine zugeordnete Halteaussparung und das Erzeugen einer Relativbewegung zwischen Heizgerätegehäuse und Heizgerätehalter erzeugt. Allein durch diese Wechselwirkung des wenigstens einen Haltevorsprungs mit der zugeordneten Halteaussparung wird ein sicherer Zusammenhalt zwischen dem Heizgerätegehäuse und dem Heizgerätehalter erzeugt, ohne dass dazu zusätzliche Befestigungsschrauben erforderlich sind. Gleichwohl ist es selbstverständlich möglich, durch derartige Befestigungsschrauben dann das Heizgerätegehäuse am Heizgerätehalter zusätzlich zu sichern, um ein ungewolltes Loslösen zu vermeiden.

Um bereits durch die Zusammenwirkung eines Haltevorsprungs mit einer zugeordneten Halteaussparung einen sehr sicheren Zusammenhalt zwischen dem Heizgerätegehäuse und dem Heizgerätehalter zu erlangen, wird vorgeschlagen, dass die erste Verschieberichtung im Wesentlichen quer zur zweiten Verschieberichtung ist.

Gemäß einem weiteren vorteilhaften Aspekt kann vorgesehen sein, dass an dem Heizgerätehalter wenigstens ein Befestigungsabschnitt vorgesehen ist, an welchem das Heizgerät durch wenigstens ein Befestigungsorgan festlegbar ist. Durch das Einbringen eines derartigen Befestigungsorgans wird dafür gesorgt, dass auch Erschütterungen oder sonstige Rüttelbewegungen nicht zu einem Lösen der ansonsten durch Relativverschiebung erlangten Halterungswirkung führen können.

Gemäß einem weiteren Aspekt der vorliegenden Erfindung kann vorgesehen sein, dass an dem Heizgerätehalter wenigstens ein Rückstellabschnitt vorgesehen ist, welcher bei Festlegung des Heizgerätes eine wenigstens der Verschiebung im zweiten Verschiebeabschnitt entgegenwirkende Kraft auf das Heizgerät ausübt. Durch das Einführen einer derartigen Kraftkomponente wird dafür gesorgt, dass im Bereich der wenigstens einen Halteaussparung und des zugeordneten Haltevorsprungs ein fester Anlagekontakt erzeugt wird, so dass zum einen eine weiter erhöhte Halterungssicherheit vorgesehen ist und zum anderen das Auftreten von Klappergeräuschen vermieden werden kann. Dabei kann der Aufbau der erfindungsgemäßen Befestigungsanordnung dadurch vereinfacht werden, dass der wenigstens eine Befestigungsabschnitt einen Rückstellabschnitt bildet. Weiter kann vorgesehen sein, dass der zweite Verschiebeabschnitt der wenigstens einen Halteaussparung bezüglich der Richtung der von dem wenigstens einen Rückstellabschnitt auf das Heizgerät ausgeübten Kraft schräg verläuft. Es wird auf diese Art und Weise ein allmählicher Anstieg der auf das Heizgerät ausgeübten Kraft erlangt. Um dabei jedoch sicherzustellen, dass in derjenigen Positionierung, in welcher das Heizgerät am Heizgerätehalter dann im festgelegten Zustand verweilt, keine einen Haltevorsprung in der zugeordneten Halteaussparung wieder zurückverschiebende Kraftkomponente verbleibt, wird vorgeschlagen, dass der zweite Verschiebeabschnitt der wenigstens einen Halteaussparung in einem Bereich, in welchem der in diese Halteaussparung eingreifende Haltevorsprung bei am Heizgerätehalter festgelegtem Heizgerät liegt, sich im Wesentlichen orthogonal bezüglich der Richtung der von dem wenigstens einen Rückstellabschnitt auf das Heizgerät ausgeübten Kraft erstreckt.

Bei einer alternativen Ausgestaltungsart kann vorgesehen sein, dass durch den Befestigungsabschnitt das Heizgerät in Richtung seiner Endmontagestellung am Heizgerätehalter vorgespannt ist. Im Gegensatz zu der vorangehend geschilderten Ausgestaltungsform, bei welcher beim Zusammenfügen des Heizgerätes mit dem Heizgerätehalter zumindest in einem Teilbereich des Montagevorgangs eine dem Zusammensetzen entgegenwirkende Kraft erzeugt wird, wird durch diese alternative Ausgestaltungsform dafür gesorgt, dass durch die Vorspannwirkung des Befestigungsabschnitts und die somit eingeführte Kraftkomponente eine sichere und gegen das Auftreten von Rüttelgeräuschen geschützte Anordnung erhalten werden kann.

Ein sehr einfach herzustellender Aufbau der erfindungsgemäßen Befestigungsanordnung kann dadurch erlangt werden, dass die wenigstens eine Halteaussparung an dem Heizgerätehalter vorgesehen ist. Dabei kann bei weiter erhöhter Halterungssicherheit der Vorgang des Zusammenfügens des Heizgerätes mit dem Heizgerätehalter dadurch vereinfacht werden, dass bei fahrzeugfest installiertem Heizgerätehalter die wenigstens eine Halteaussparung sich mit ihrem ersten Verschiebeabschnitt im Wesentlichen vertikal erstreckt. Weiter kann der Zusammenhalt zwischen dem Heizgerätehalter und dem Heizgerät dadurch verbessert werden, dass wenigstens zwei Halteaussparungen quer zur ersten Verschieberichtung nebeneinander vorgesehen sind.

Weiter kann bei der erfindungsgemäßen Befestigungsanordnung vorgesehen sein, dass der wenigstens eine Haltevorsprung in seinem die wenigstens eine Halteaussparung durchsetzenden Bereich sich verjüngend ausgebildet ist. Vorzugsweise kann bei einer derartigen Anordnung dann weiter vorgesehen sein, dass die wenigstens eine Halteaussparung in einer Richtung, in welcher der wenigstens eine Haltevorsprung diese durchsetzt, sich verjüngend ausgebildet ist. Durch diese verjüngende Ausgestaltung wird dafür gesorgt, dass das Heizgerät durch Keilwirkung bereits beim Zusammenfügen und ggf. auch durch die angesprochenen Kraftkomponenten in fester Anlage am Heizgerätehalter gehalten ist.

Gemäß einem weiteren Aspekt betrifft die vorliegende Erfindung eine Befestigungsanordnung zur festen Anbringung eines Fahrzeugheizgerätes an einem Fahrzeug, umfassend einen fahrzeugfest zu installierenden Heizgerätehalter, an einer Baugruppe von Heizgerätehalter und Heizgerät wenigstens einen Haltevorsprung und an der anderen Baugruppe von Heizgerätehalter und Heizgerät wenigstens eine zur Festlegung des Heizgeräts an dem Heizgerätehalter den wenigstens einen Haltevorsprung aufnehmende Halteaussparung, wobei die wenigstens eine Halteaussparung einen Eintrittsbereich aufweist, in welchem der wenigstens eine Haltevorsprung in diese eingreifend positionierbar ist, einen an den Eintrittsbereich anschließenden Verschiebeabschnitt aufweist, in welchem der wenigstens eine Haltevorsprung bei Festlegung des Heizgerätes bei beibehaltenem Eingriff in die wenigstens eine Halteaussparung verschiebbar ist, wobei bei an dem Heizgerätehalter festgelegtem Heizgerät der wenigstens eine Haltevorsprung in den zweiten Verschiebeabschnitt eingreifend positioniert ist.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine Seitenansicht eines mit einem Heizgerätehalter zusammengesetzten Heizgerätes;
- Fig. 2: eine Draufsicht auf das in Fig. 1 dargestellte Heizgerät;
- Fig. 3: eine Ansicht der in Fig. 1 dargestellten Anordnung in Blickrichtung III in Fig. 1, wobei der Heizgerätehalter geschnitten dargestellt ist;
- Fig. 4: eine Frontansicht des Heizgerätehalters in Blickrichtung IV in Fig. 6;
- Fig. 5: eine Draufsicht auf den Heizgerätehalter der Fig. 4 in Blickrichtung V in Fig. 4;
- Fig. 6: eine Seitenansicht des in Fig. 4 dargestellten Heizgerätehalters in Blickrichtung VI in Fig. 4;
- Fig. 7: eine Teil-Schnittansicht, welche eine Ausgestaltungsform eines in eine Halteaussparung eingreifenden Schraubbolzens zeigt.

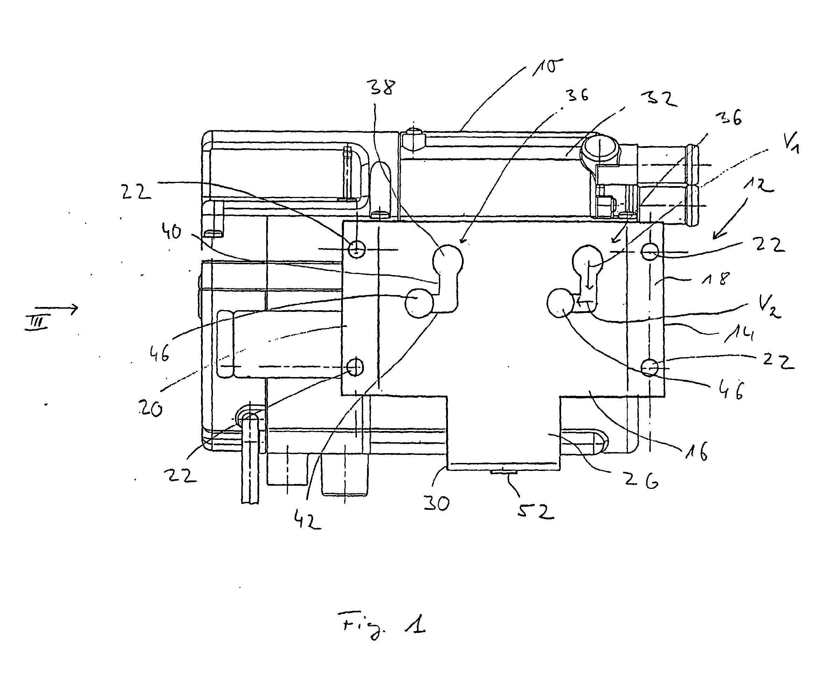

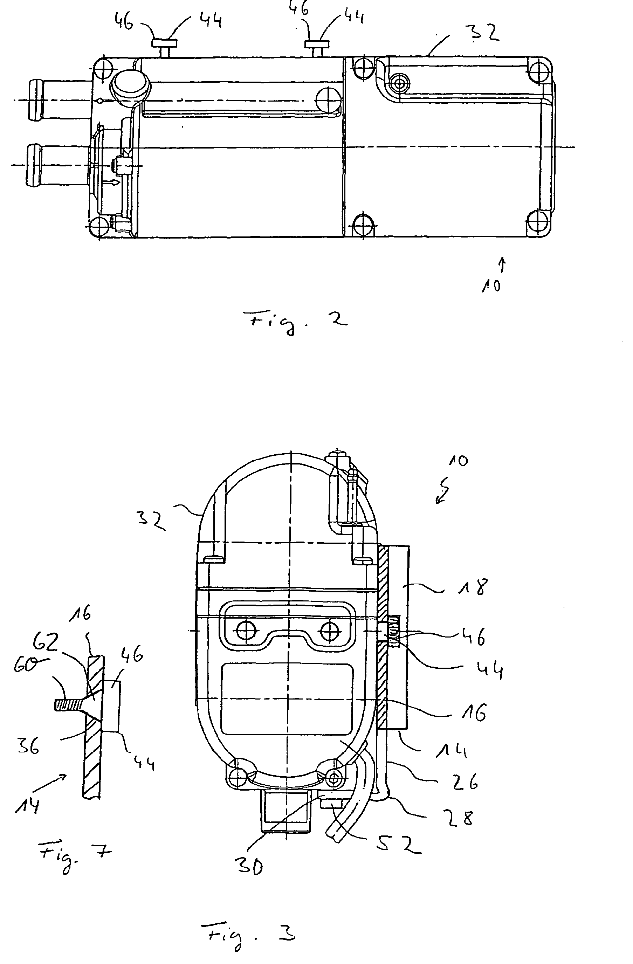

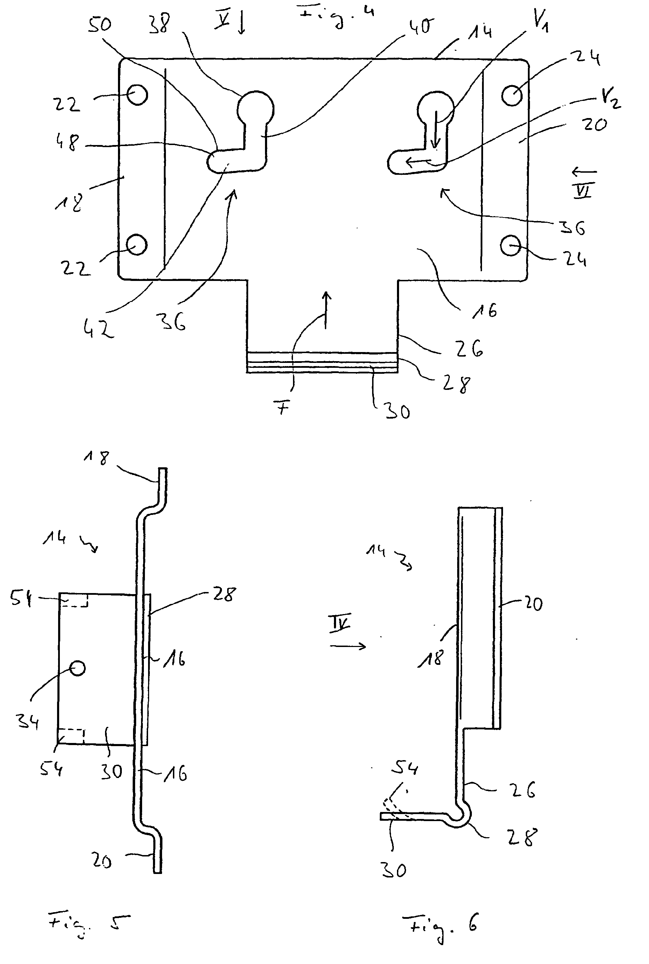

In den Figuren 1 bis 3 ist ein Heizgerät 10 erkennbar, das beispielsweise als Standheizung oder als Zuheizer in einem Kraftfahrzeug eingesetzt werden kann. Das Heizgerät 10 wird vermittels einer nachfolgend noch detailliert beschriebenen Befestigungsanordnung 12 an einem Fahrzeug fest angebracht. Diese Befestigungsanordnung 12 umfasst einen in den Figuren 4 bis 6 auch detaillierter erkennbaren Heizgerätehalter 14. Dieser im Wesentlichen plattenartig aufgebaute Heizgerätehalter 14 kann durch Ausstanzen und Umformen eines Blechrohlings erhalten werden. Der Heizgerätehalter 14 weist einen zentralen Körperbereich 16 auf, an welchen an beiden Seiten Anbringungsabschnitte 18, 20 anschließen. Um die Montage des Heizgerätehalters 14 an einem Fahrzeug zu erleichtern, sind die Anbringungsabschnitte 18, 20 bezüglich des zentralen Körperbereichs 16 versetzt, so dass die zur Anlage an einer Fahrzeugkarosserie o. dgl. kommende Oberfläche des Heizgerätehalters verleichsweise klein ist. In den Anbringungsabschnitten 18, 20 sind Durchgangsöffnungen 22, 24 vorgesehen, durch welche hindurch Befestigungsschrauben o. dgl. zur Festlegung des Heizgerätehalters 14 an dem Fahrzeug geschraubt werden können. Zwischen den beiden Anbringungsabschnitten 18, 20 erstreckt sich von dem zentralen Körperbereich 14 ein Befestigungabschnitt 26. Der Befestigungsabschnitt 26 ist in einem Biegungsbereich 28 näherungsweise rechtwinklig zu der durch den zentralen Körperbereich 16 aufgespannten Ebene abgebogen und bildet mit seinem Endbereich einen Auflageabschnitt 30, auf welchem, wie im Folgenden noch beschrieben, ein Heizgerätegehäuse 32 des Heizgeräts 10 zur Auflage kommt. In diesem Auflageabschnitt 30 ist eine weitere Durchgangsöffnung 34 ausgebildet.

Man erkennt in Fig. 4 ferner, dass im zentralen Körperbereich 16 nebeneinander zwei Halteaussparungen 36 ausgebildet sind. Diese können beispielsweise durch Ausschneiden oder Ausstanzen im zentralen Körperbereich gebildet werden. Die Halteaussparungen 36, welche in ihrer Form einander im Wesentlichen entsprechen, weisen in dem bei Anbringung des Heizgerätehalters 14 am Fahrzeug im Wesentlichen oben liegenden Bereich derselben einen Eintrittsbereich 38 auf. An diesen Eintrittsbereich 38 schließt sich ein erster Verschiebebereich 40 an, der bei am Fahrzeug angebrachtem Heizgerätehalter 14 sich näherungsweise vom Eintrittsbereich 38 vertikal nach unten erstreckt und eine geringere Breite aufweist, als der Eintrittsbereich 38. An seinem vom Eintrittsbereich 38 entfernten Endbereich geht der erste Verschiebeabschnitt 40 über in einen zweiten Verschiebeabschnitt 42. Dieser erstreckt sich im Wesentlichen quer zum ersten Verschiebeabschnitt 40, steht jedoch nicht senkrecht zu diesem, sondern verläuft bei vertikaler Orientierung des ersten Verschiebeabschnitts 40 leicht schräg nach unten.

In Zuordnung zu den beiden Halteaussparungen 36 sind, wie in Fig. 2 erkennbar, am Heizgerätegehäuse 32 des Heizgeräts 10 zwei beispielsweise durch Flachkopfschrauben gebildete Haltevorsprünge 44 vorgesehen. Diese sind am Heizgerätegehäuse 32 beispielsweise durch Einschrauben in Innengewindeöffnungen festgelegt, wobei der Abstand der Innengewindeöffnungen dem seitlichen Abstand der Eintrittsbereiche 38 der beiden Halteaussparungen 36 im Heizgerätehalter 14 entspricht. Um bei der Montage eine höhere Flexibilität zu erlangen, können an beiden Seiten des Heizgerätegehäuses 32 derartige Öffnungen zur Anbringung von Haltevorsprüngen bzw. Schraubbolzen 44 vorgesehen sein.

Zur Festlegung des Heizgerätes 10 bzw. des Heizgerätegehäuses 32 am Heizgerätehalter 14 werden, nachdem der Heizgerätehalter 14 in geeigneter Positionierung am Fahrzeug angebracht worden ist, vorzugsweis derart, dass die beiden ersten Verschiebeabschnitte 40 sich ausgehend von den Eintrittsbereichen 38 näherungsweise vertikal nach unten erstrecken, die beiden Haltevorsprünge 44 mit ihren Kopfbereichen 46 in die Eintrittsbereiche 38 eingeführt. Man erkennt, dass die Form der Eintrittsbereiche 38 an die Form der Kopfbereiche 46 der als Haltevorsprünge 44 eingesetzten Schraubbolzen angepasst ist. Nach dem Einführen der Haltevorsprünge 44 in die Eintrittsbereiche 38 wird das Heizgerät 10 in einer ersten Verschieberichtung V₁ entlang des jeweiligen ersten Verschiebeabschnitts 40 verschoben. Diese Verschiebung dauert an, bis der erste Verschiebeabschnitt 40 in den zweiten Verschiebeabschnitt 42 übergeht, in welchem dann der jeweilige Haltevorsprung 44 in Richtung einer zweiten Verschieberichtung V₂ verschoben wird, bis er im Endbereich 48 dieses zweiten Verschiebeabschnitts 42 zu liegen kommt.

Zumindest in der Verschiebephase, in welcher die Haltevorsprünge 44 sich in den jeweiligen zweiten Verschiebeabschnitten 42 verschieben, ist das Heizgerätegehäuse 32 bereits in Anlage an dem Auflageabschnitt 30 des Heizgerätehalters 14. Da, wie man in Fig. 4 erkennt, die zweiten Verschiebeabschnitte 42 sich nicht exakt orthogonal zu den ersten Verschiebeabschnitten 40 erstrecken, sondern sich ausgehend von den ersten Verschiebeabschnitten 40 leicht schräg in Richtung auf den Auflageabschnitt 30 zu erstrecken, wird das Heizgerätegehäuse 32 bei Verschiebung der Haltevorsprünge 44 in der zweiten Verschieberichtung V₂ zunehmend stärker gegen den Auflageabschnitt 30 gepresst. Bei Ausbildung beispielsweise aus Blechmaterial ist dieser insbesondere auch auf Grund des Vorsehens des Biegungsbereichs 28 federelastisch wirksam, so dass er bei der angesprochenen Verlagerung des Heizgerätegehäuses 32 eine zunehmend größer werdende Kraft F auf dieses ausübt. Die Kraft F wirkt auf Grund der Schrägstellung der zweiten Verschiebeabschnitte 42 zunächst der Verschiebung in der zweiten Verschieberichtung V₂ entgegen. In ihren Endbereichen 48 sind jedoch die zweiten Verschiebeabschnitte 42 derart ausgebildet, dass sie zu der Richtung der Kraft F, welche durch den Auflageabschnitt 30 auf das Heizgerätegehäuse 32 ausgeübt wird, im Wesentlichen orthogonal stehen, was wiederum bedeutet, dass in ihren Endbereichen 48 die zweiten Verschiebeabschnitte 42 sich auch näherungsweise orthogonal zu den ersten Verschiebeabschnitten 40 erstrecken. Orthogonale Erstreckung der Verschiebeabschnitte 42 in ihren Endbereichen 48 kann beispielsweise auch bedeuten, dass ein Wandungsbereich 50, welcher die zweiten Verschiebeabschnitte 42 im Endbereich 48 begrenzt, sich orthogonal zu den angesprochenen Richtungen erstreckt, wobei dieser Wandungsbereich 50 derjenige Wandungsbereich ist, gegen welchen die Kraft F die Haltevorsprünge 44 presst, wenn diese vollständig in die Halteaussparungen 36 eingeschoben sind und somit im Wesentlichen im Endbereich 48 derselben liegen. Es kann auf diese Art und Weise sichergestellt werden, dass im vollkommen eingeschobenen Zustand durch die Kraft F keine die Haltevorsprünge 44 wieder aus dem zweiten Verschiebeabschnitt 42 herauspressende Kraft erzeugt werden kann. Hier kann beispielsweise auch vorgesehen sein, dass im Endbereich 48 die zweiten Verschiebeabschnitte 42 wieder leicht schräg nach oben geneigt sind, so dass sogar eine Rastwirkung erlangt werden kann.

Befinden sich die Haltevorsprünge 44 in den Endbereichen 48 der Halteaussparungen 36, so liegt eine im Heizgerätegehäuse 32 vorgesehene Innengewindeöffnung über der bereits angesprochenen Durchgangsöffnung 34 im Auflageabschnitt 30. Es kann dann zur Sicherung des Heizgeräts 10 am Heizgerätehalter 14 eine Befestigungsschraube 52 durch die Durchgangsöffnung 34 hindurch und in das Heizgerätegehäuse 32 eingeschraubt werden, wodurch das Heizgerät 10 vollständig am Heizgerätehalter 14 fixiert ist. Im Bereich des Auflageabschnitts 30 kann ein weiterer Zusammenhalt des Heizgerätehalters 14 mit dem Heizgerätegehäuse 32 dadurch erlangt werden, dass am Auflageabschnitt 30 beispielsweise in beiden Endbereichen desselben nach oben gebogene Eingriffsabschnitte 54 vorgesehen sind, die in entsprechende Ausnehmungen im Heizgerätegehäuse 12 eingreifen.

Die Fig. 7 zeigt eine in einen Heizgerätehalter 14 eingeführte und einen Haltevorsprung bildende Schraube mit ihrem Kopf 46 und ihrem in das Heizgerätegehäuse 32 einzuschraubenden Gewindeabschnitt 60. Im Übergangsbereich zwischen dem Kopf 46 und dem Gewindeabschnitt 60, also demjenigen Bereich 62, mit welchem diese als Haltevorsprung 44 wirksame Schraube die Halteaussparung 36 des Heizgerätehalters 14 durchsetzt, ist diese vom Schraubkopf 46 zum Gewindeabschnitt 60 hin sich verjüngend, beispielsweise konisch verjüngend, ausgebildet. In entsprechender Weise ist auch die zugeordnete Halteaussparung 36 beispielsweise zumindest im Verschiebeabschnitt 42 bzw. im Endbereich 48 desselben sich in derjenigen Richtung, in welcher der Haltevorsprung 44 diese Halteaussparung 36 durchsetzt, verjüngend bzw. konisch verjüngend ausgebildet. Dadurch wird nach Art einer Keilwirkung eine Kraftkomponente eingeführt, durch welche das Heizgerätegehäuse 32 in feste Anlage am Heizgerätehalter gezogen wird. Dies ist vor allem dann von besonderer Wirksamkeit, wenn gemäß einer weiteren alternativen Ausgestaltungsform der Auflageabschnitt 30 derart ausgebildet ist, dass er keine in Richtung der in Fig. 4 eingezeichneten Kraft F wirksame Kraftkomponente entfaltet, sondern eine Kraftkomponente, die in entgegengesetzter Richtung gerichtet ist und somit dafür sorgt, dass die Haltevorsprünge 44 zwangsweise in Richtung der Endbereiche 48 der Halteaussparungen 36 vorgespannt werden. Dies kann beispielsweise dadurch erlangt werden, dass bei in den Endbereichen 48 liegenden Haltevorsprüngen 44 zunächst der Auflageabschnitt 30 noch einen Abstand zum Heizgerätegehäuse 32 aufweist und erst durch Einbringen der Befestigungsschraube 52 dann unter elastischer Verformung insbesondere im Biegungsbereich 28 auf das Heizgerätegehäuse zu gezogen wird. Durch die dann eingeführte und der Kraftkomponente F in Fig. 4 entgegengesetzt gerichtete Kraft werden die in Fig. 7 erkennbaren keilartigen Konfigurationen verstärkt wirksam. Das Heizgerätegehäuse 32 wird durch die vermittels des Auflageabschnitts 30 eingeführte Kraftkomponente auch fest an den Körperbereich 16 des Heizgerätehalters 14 gezogen.

Durch die erfindungsgemäß ausgestaltete Befestigungsanordnung wird eine sehr einfach herzustellende, gleichwohl jedoch sehr sicher wirkende Halterung des Heizgeräts an dem Heizgerätehalter ermöglicht. Allein das Einsetzen der Haltevorsprünge in die zugeordneten Halteaussparungen sorgt für eine Arretierung des Heizgeräts, ohne dass zusätzlich Befestigungsschrauben o. dgl. eingebracht werden müssten. Es ist somit die Vornahme der Montage mit einer Hand möglich. Ferner wird durch die in die Halteaussparungen eingreifenden Haltevorsprünge auch in Zusammenwirkung mit der zusätzlichen an der Unterseite des Heizgerätegehäuses angreifenden Befestigungsschraube ein sehr stabiler Zusammenhalt erlangt, wobei durch das Bereitstellen einer Vorspannkraft vermieden wird, dass im Betrieb Klappergeräusche auftreten. Durch die Ausgestaltung der zweiten Verschiebeabschnitte in ihren Endbereichen wird gleichwohl dafür gesorgt, dass durch die Vorspannkraft keine das Heizgerät aus seiner Endmontagestellung heraus beaufschlagende Kraftkomponente vorhanden ist. Vielmehr kann, wie bereits ausgeführt, hier sogar für eine Rastwirkung gesorgt werden. Der Vorgang der Demontage des Heizgerätes vom Heizgerätehalter ist ebenso einfach durchführbar, wie der Vorgang der Montage, so dass auch Wartungsarbeiten am Heizgerät selbst nach dessen Demontage einfach durchgeführt werden können.

Es sei darauf hingewiesen, dass selbstverständlich die Halteaussparungen auch derart ausgebildet sein können, dass der erste Verschiebeabschnitt nicht unmittelbar in den zweiten Verschiebeabschnitt übergeht, sondern dass beipsielsweise ein Übergangsbereich mit noch anderer Verschieberichtung vorgesehen ist. Ferner ist es selbstverständlich, dass die Anzahl der vorzusehenden Halteaussparungen und der zugeordneten Haltevorsprünge entsprechend den erforderlichen Haltekräften ausgewählt werden kann. Eine weitere Abwandlung kann vorsehen, dass die Halteaussparungen 36 nur einen sich im Wesentlichen geradlinig erstreckenden Verschiebeabschnitt aufweisen, der bei am Fahrzeug angebrachtem Heizgerätehalter sich vorzugsweise so erstreckt, wie der zweite Verschiebeabschnitt 42 der vorangehend beschriebenen Halteaussparungen 36. Dies bedeutet letztendlich, dass die Länge des ersten Verschiebeabschnitts 40 der vorangehend beschriebenen Ausgestaltungsformen gegen Null geht. Beim Einfügen der Haltevorsprünge 44 in die Eintrittsbereiche 38 hintergreifen dann die Kopfbereiche 46 der Haltevorsprünge 44 auch unter Einwirkung der Schwerkraft den Randbereich der Halteaussparungen, so dass auch dort bereits nach dem Einfügen der Haltevorsprünge 44 in die Eintrittsbereiche 38 eine vorläufige Fixierung des Heizgerätegehäuses am Heizgerätehalter erlangt wird. Darauf folgend können die Haltevorsprünge dann entlang der Verschiebeabschnitte bewegt werden, bis die Endbereiche erreicht sind. Der Auflageabschnitt 30 kann dann so wie vorangehend beschrieben wirksam werden bzw. kann bereits während der Verschiebebewegung wirksam werden, wenn er die in Fig. 4 dargestellte Kraftkomponente F erzeugen soll.

## Patentansprüche

1. Befestigungsanordnung zur festen Anbringung eines Fahrzeugheizgerätes (10) an einem Fahrzeug, umfassend einen fahrzeugfest zu installierenden Heizgerätehalter (14), an einer Baugruppe von Heizgerätehalter (14) und Heizgerät (10) wenigstens einen Haltevorsprung (44) und an der anderen Baugruppe von Heizgerätehalter (14) und Heizgerät (10) wenigstens eine zur Festlegung des Heizgeräts (10) an dem Heizgerätehalter (14) den wenigstens einen Haltevorsprung (44) aufnehmende Halteaussparung (36), wobei die wenigstens eine Halteaussparung (36) einen Eintrittsbereich (38) aufweist, in welchem der wenigstens eine Haltevorsprung (44) in diese eingreifend positionierbar ist,
**dadurch gekennzeichnet, dass**
die wenigstens eine Halteaussparung (36) einen an den Eintrittsbereich (38) anschlie-ßenden Verschiebeabschnitt (40) aufweist, in welchem der wenigstens eine Haltevorsprung (44) bei Festlegung des Heizgerätes (10) bei beibehaltenem Eingriff in die wenigstens eine Halteaussparung (36) verschiebbar ist, wobei bei an dem Heizgerätehalter (14) festgelegtem Heizgerät (10) der wenigstens eine Haltevorsprung (44) in den Verschiebeabschnitt (42) eingreifend positioniert ist, wobei an dem Heizgerätehalter (14) wenigstens ein Rückstellabschnitt (30) vorgesehen ist, welcher bei Festlegung des Heizgerätes (10) eine wenigstens der Verschiebung im Verschiebeabschnitt (42) entgegenwirkende Kraft (F) auf das Heizgerät (10) ausübt, der Verschiebeabschnitt (42) der wenigstens einen Halteaussparung (36) bezüglich der Richtung der von dem wenigstens einen Rückstellabschnitt (30) auf das Heizgerät (10) ausgeübten Kraft (F) schräg verläuft und der Verschiebeabschnitt (42) der wenigstens einen Halteaussparung (36) in einem Bereich (48), in welchem der in diese Halteaussparung (36) eingreifende Haltevorsprung (44) bei am Heizgerätehalter (14) festgelegtem Heizgerät (10) liegt, sich im Wesentlichen orthogonal bezüglich der Richtung der von dem wenigstens einen Rückstellabschnitt (30) auf das Heizgerät (10) ausgeübten Kraft (F) erstreckt.

2. Befestigungsanordnung nach Anspruch 1, wobei die Halteaussparung (36) einen an den Eintrittsbereich (38) anschließenden ersten Verschiebeabschnitt (40) aufweist, in welchem der wenigstens eine Haltevorsprung (44) bei Festlegung des Heizgerätes (10) in einer ersten Verschieberichtung (V,) bei beibehaltenem Eingriff in die wenigstens eine Halteaussparung (36) verschiebbar ist, und einen an den ersten Verschiebeabschnitt (40) anschließenden zweiten Verschiebeabschnitt (42) aufweist, in welchem der wenigstens eine Haltevorsprung (44) bei Festlegung des Heizgerätes (10) bei beibehaltenem Eingriff in die wenigstens eine Halteaussparung (36) in einer von der ersten Verschieberichtung (V,) sich unterscheidenden zweiten Verschieberichtung (V2) verschiebbar ist, wobei bei an dem Heizgerätehalter (14) festgelegtem Heizgerät (10) der wenigstens eine Haltevorsprung (44) in den zweiten Verschiebeabschnitt (42) eingreifend positioniert ist.

3. Befestigungsanordnung nach Anspruch 2, wobei die erste Verschieberichtung (V,) im Wesentlichen quer zur zweiten Verschieberichtung (V2) ist.

4. Befestigungsanordnung nach Anspruch 3, wobei an dem Heizgerätehalter (14) wenigstens ein Befestigungsabschnitt (30) vorgesehen ist, an welchem das Heizgerät (10) durch wenigstens ein Befestigungsorgan (52) festlegbar ist.

5. Befestigungsanordnung nach Anspruch 4, wobei der wenigstens eine Befestigungsabschnitt (30) einen Rückstellabschnitt (30) bildet.

6. Befestigungsanordnung nach Anspruch 4, wobei durch den Befestigungsabschnitt (30) das Heizgerät (10) in seine Endmontagestellung am Heizgerätehalter (14) vorgespannt ist.

7. Befestigungsanordnung nach einem der Ansprüche 1 bis 6, wobei die wenigstens eine Halteaussparung (36) an dem Heizgerätehalter (14) vorgesehen ist.

8. Befestigungsanordnung nach Anspruch 7, wobei bei fahrzeugfest installiertem Heizgerätehalter (14) die wenigstens eine Halteaussparung (36) sich mit ihrem ersten Verschiebeabschnitt (40) im Wesentlichen vertikal erstreckt.

9. Befestigungsanordnung nach einem der Ansprüche 2 bis 8, wobei wenigstens zwei Halteaussparungen (36) quer zur ersten Verschieberichtung (V,) nebeneinander vorgesehen sind.

10. Befestigungsanordnung nach einem der Ansprüche 1 bis 9, wobei der wenigstens eine Haltevorsprung (44) in seinem die wenigstens eine Halteaussparung (36) durchsetzenden Bereich (62) sich verjüngend ausgebildet ist.

11. Befestigungsanordnung nach Anspruch 10, wobei die wenigstens eine Halteaussparung (36) in einer Richtung, in welcher der wenigstens eine Haltevorsprung (44) diese durchsetzt, sich verjüngend ausgebildet ist.

## Claims

1. Fastening system for solidly mounting a vehicle heating device (10) on a vehicle, comprising a heating device holder (14) which is to be installed on the vehicle, at least one holding projection (44) on one subassembly of heating device holder (14) and heating device (10) and at least one holding cutout (36) on the other subassembly of heating device holder (14) and heating device (10), the holding cutout receiving the at least one holding projection (44) in order to fix the heating device (10) on the heating device holder (14), the at least one holding cutout (36) having an entry region (38) in which the at least one holding projection (44) can be positioned such that it engages in the said holding cutout, **characterized in that** the at least one holding cutout (36) has a displacement section (40) which adjoins the entry region (38) and in which, when fixing the heating device (10) and with the engagement maintained, the at least one holding projection (44) can be displaced into the at least one holding cutout (36), with, when the heating device (10) is fixed on the heating device holder (14), the at least one holding projection (44) being positioned such that it engages in the displacement section (42), with at least one resetting section (30) being provided on the heating device holder (14), which resetting section, during fixing of the heating device (10), exerts a force (F) on the heating device (10) that at least opposes the displacement in the displacement section (42), the displacement section (42) of the at least one holding cutout (36) runs obliquely with respect to the direction of the force (F) exerted on the heating device (10) by the at least one resetting section (30), and the displacement section (42) of the at least one holding cutout (36) extends essentially orthogonally with respect to the direction of the force (F) exerted on the heating device (10) by the at least one resetting section (30), in a region (48) in which the holding projection (44) engaging in this holding cutout (36) is situated when the heating device (10) is fixed on the heating device holder (14).

2. Fastening system according to Claim 1, the holding cutout (36) having a first displacement section (40) which adjoins the entry region (38) and in which, when the heating device (10) is fixed in a first displacement direction (V₁), with the engagement maintained, the at least one holding projection (44) can be displaced into the at least one holding cutout (36), and a second displacement section (42) which adjoins the first displacement section (40) and in which, when the heating device (10) is fixed, with the engagement maintained, the at least one holding projection (44) can be displaced into the at least one holding cutout (36) in a second displacement direction (V2) differing from the first displacement direction (V₁) with the at least one holding projection (44) being positioned such that it engages in the second displacement section (42) when the heating device (10) is fixed on the heating device holder (14).

3. Fastening system according to Claim 2, the first displacement direction (V₁) being essentially transverse to the second displacement direction (V2).

4. Fastening system according to Claim 3, at least one fastening section (30) being provided on the heating device holder (14), to which fastening section the heating device (10) can be fixed by at least one fastening member (52).

5. Fastening system according to Claim 4, the at least one fastening section (30) forining a resetting section (30).

6. Fastening system according to Claim 4, the heating device (10) being prestressed into its final installation position on the heating device holder (14) by the fastening section (30).

7. Fastening system according to one of Claims 1 to 6, the at least one holding cutout (36) being provided on the heating device holder (14).

8. Fastening system according to Claim 7, the at least one holding cutout (36) extending essentially vertically by means of its first displacement section (40) when the heating device holder (14) is installed on the vehicle.

9. Fastening system according to one of Claims 2 to 8, at least two holding cutouts (36) being provided next to one another transversely to the first displacement direction (V₁).

10. Fastening system according to one of Claims 1 to 9, the at least one holding projection (44) being designed such that it tapers in its region (62) passing through the at least one holding cutout (36).

11. Fastening system according to Claim 10, the at least one holding cutout (36) being designed such that it tapers in a direction in which the at least one holding projection (44) passes through it.

## Revendications

1. Système de fixation pour le montage solide d'un appareil de chauffage d'un véhicule (10) sur un véhicule, comprenant un support d'appareil de chauffage (14) devant être installé de manière fixée au véhicule, au moins une projection de support (44) sur un module constitué par le support d'appareil de chauffage (14) et l'appareil de chauffage (10) et au moins un évidement de support (36) sur l'autre module constitué par le support d'appareil de chauffage (14) et l'appareil de chauffage (10), recevant l'au moins une projection de support (44) pour la fixation de l'appareil de chauffage (10) sur le support d'appareil de chauffage (14), l'au moins un évidement de support (36) présentant une zone d'entrée (38) dans laquelle l'au moins une projection de support (44) peut être positionnée en s'engageant dans celle-ci,
**caractérisé en ce que**
au moins un évidement de support (36) présente une portion de coulissement (40) se raccordant à la zone d'entrée (38), dans laquelle l'au moins une projection de support (44) peut coulisser lors de la fixation de l'appareil de chauffage (10) en conservant l'engagement dans l'au moins un évidement de support (36), l'au moins une projection de support (44) étant positionnée en engagement dans la position de coulissement (42) lorsque l'appareil de chauffage (10) est fixé sur le support d'appareil de chauffage (14), au moins une portion de rappel (30) étant prévue sur le support d'appareil de chauffage (14), laquelle exerce sur l'appareil de chauffage (10) une force (F) agissant au moins à l'encontre du coulissement dans la portion de coulissement (42) lors de la fixation de l'appareil de chauffage (10), la portion de coulissement (42) de l'au moins un évidement de support (36) s'étendant obliquement par rapport à la direction de la force (F) exercée sur l'appareil de chauffage (10) par l'au moins une portion de rappel (30), et la portion de coulissement (42) de l'au moins un évidement de support (36) s'étendant essentiellement perpendiculairement par rapport à la direction de la force (F) exercée sur l'appareil de chauffage (10) par l'au moins une portion de rappel (30) dans une zone (48) dans laquelle se trouve la projection de support (44) venant en prise dans cet évidement de support (36) lorsque l'appareil de chauffage (10) est fixé sur le support d'appareil de chauffage (14).

2. Système de fixation selon la revendication 1, dans lequel l'évidement de support (36) présente une première portion de coulissement (40) se raccordant à la zone d'entrée (38), dans laquelle l'au moins une projection de support (44) peut coulisser lors de la fixation de l'appareil de chauffage (10) dans une première direction de coulissement (V₁) en conservant l'engagement dans l'au moins un évidement de support (36), et une deuxième portion de coulissement (42) se raccordant à la première portion de coulissement (40), dans laquelle l'au moins une projection de support (44) peut coulisser lors de la fixation de l'appareil de chauffage (10) en conservant l'engagement dans l'au moins un évidement de support (36) dans une deuxième direction de coulissement (V₂) différente de la première direction de coulissement (V₁), l'au moins une projection de support (44) étant positionnée en engagement dans la deuxième portion de coulissement (42) lorsque l'appareil de chauffage (10) est fixé sur le support d'appareil de chauffage (14).

3. Système de fixation selon la revendication 2, dans lequel la première direction de coulissement (V₁) est essentiellement transversale à la deuxième direction de coulissement (V₂).

4. Système de fixation selon la revendication 3, dans lequel on prévoit sur le support d'appareil de chauffage (14) au moins une portion de fixation (30) à laquelle l'appareil de chauffage (10) peut être fixé par au moins un organe de fixation (52).

5. Système de fixation selon la revendication 4, dans lequel l'au moins une portion de fixation (30) forme une portion de rappel (30).

6. Système de fixation selon la revendication 4, dans lequel l'appareil de chauffage (10) est précontraint par la portion de fixation (30) dans sa position de montage final sur le support d'appareil de chauffage (14).

7. Système de fixation selon l'une quelconque des revendications 1 à 6, dans lequel au moins un évidement de support (36) est prévu sur le support d'appareil de chauffage (14).

8. Système de fixation selon la revendication 7, dans lequel l'au moins un évidement de support (36) s'étend essentiellement verticalement avec sa première portion de coulissement (40) lorsque le support d'appareil de chauffage (14) est installé de manière fixée au véhicule.

9. Système de fixation selon l'une quelconque des revendications 2 à 8, dans lequel au moins deux évidements de support (36) sont prévus l'un à côté de l'autre transversalement à la première direction de coulissement (V₁).

10. Système de fixation selon l'une quelconque des revendications 1 à 9, dans lequel l'au moins une projection de support (44) est réalisée en se rétrécissant dans sa partie (62) traversant l'au moins un évidement de support (36).

11. Système de fixation selon la revendication 10, dans lequel l'au moins un évidement de support (36) est réalisé en se rétrécissant dans une direction dans laquelle l'au moins une projection de support (44) le traverse.
